# EUROPEAN PATENT APPLICATION

(11) **EP 4 726 010 A1**
(43) Date of publication of application: **15.04.2026**
(21) Application number: 24464009.0
(22) Date of filing: 30.10.2024
(51) Int. Cl.: C09K 11/74

(54) **PREPARATION METHOD OF A PHOTONIC CONVERSION MEDIUM FOR IMPROVING THE EFFICIENCY OF THE PV SOLAR PANELS**

(30) Priority: 11.10.2024 RO 202400607
(71) Applicant: Universitatea Tehnica "Gheorghe Asachi" Din Iasi, 700050 Iasi (RO)
(72) Inventor: Stan, Corneliu-Sergiu, Iasi (RO); Albu, Cristina, Iasi (RO); Popa, Marcel, Iasi (RO); Ovin, Ania Maria Concepcion, PD4 DC Oviedo, Asturias (ES)
(74) Representative: Dobrescu, Teodora Valentina

(57) **Abstract**

The invention refers to a photonic conversion medium based on carbon nanostructures doped with bismuth (CNS:Bi), introduced into a cross-linked polymer matrix of poly(acrylic acid-co-2-hydroxyethyl methacrylate-co-N,N'- methylene bisacrylamide) that exhibits intense photoluminescent emission located in the blue-green region of the visible spectrum within an extended UV excitation range, high optical transparency, and processability in thin layers. The photonic conversion medium is prepared by introducing carbon nanostructures (CNS:Bi) obtained by thermal processing of a Bi(III) complex with N-Hydroxyphthalimide, the resulting reaction mass being dispersed in D₂O thus allowing a significant increase in the efficiency of specific radiative processes, followed by the solvation of monomers, crosslinker and polymerization photoinitiator, in the mentioned D₂O/CNS:Bi dispersion.

The films deposited on photovoltaic solar panels are obtained by spraying on their outer surface the mixture of monomers, crosslinker, photoinitiator and dispersed CNS:Bi, in D2O, followed by photopolymerization by exposure to solar radiation or artificial UV sources. The obtained thin layers allow the harvesting of the UV component of solar radiation, a spectral range where current PV cells show a lower sensitivity, by converting UV photons in a spectral domain located in the visible area where current PV cells present their optimal level of sensitivity.

## Description

The invention refers to a photonic conversion medium based on carbon nanostructures doped with Bi³⁺ (CNS:Bi) trapped into a cross-linked polymer matrix of poly(acrylic acid-co-2-hydroxyethylmethacrylate-co-N,N'-methylenebisacrylamide) (P-AAHMMA), which exhibits strong photoluminescent emission located in the blue-green region of the visible spectrum, extended excitation range (300-400 nm), high optical transparency, and processability in thin layers. The photon conversion medium is obtained by introducing CNS:Bi nanostructures prepared by partial thermal processing of a Bi(lll) complex and dispersion in deuterated water (D₂O), followed by their introduction into the cross-linked polymer P-AAHMMA matrix and further deposited as a thin layer on the surface of solar photovoltaic (PV) panels. The Bi(lll) complex is thermally processed under controlled temperature and duration of the thermal exposure conditions, whereas at the end of the process D₂O is used as dispersion medium. The use of D₂O allows obtaining a high intensity of the photoluminescent emission by substantially increasing the efficiency of the radiative processes specific to CNS:Bi. The significant increase in the intensity of their photoluminescent emission is most likely due to the subtle differences between D₂O and H₂O. Thus, D₂O has a significantly lower dissociation tendency compared to H₂O, due to the increase in the strength of the D-O⁻ bond compared to H-O⁻ [1,2], which markedly decreases the concentration of HO⁻ oscillators in the vicinity of the luminescence centers, thus avoiding nonradiative vibrational relaxations, the consequence being the increase in the number of photons emitted as a result of UV photoexcitation. The thin layers are obtained by spraying the monomer mixture, CNS:Bi, polymerization photoinitiator on the PV surface followed by exposure to solar radiation or a UV source for UV curing. The obtained thin layer allows the harvesting of the UV component (region where current PVs show a low sensitivity) of the incident solar radiation by converting UV photons to a spectral domain located in the visible area where current PVs show their typical level of sensitivity.

There are already known photonic conversion mediums used for increasing the conversion efficiency of PV cells obtained by introducing photoemissive graphene nanostructures (GQD) into polymer matrices of NOA (Norland Optical Adhesive) which can be processed in thin layers deposited on the PV cells surface by photopolymerization [3]. Another approach involves increasing the absorption of UV photons from solar radiation by using polymeric aggregates containing Eu(III) cations introduced into the polymeric PV structure [4]. CdS-based Quantum Dots nanocrystals (QDs) were introduced into polydimethylsiloxane matrices, obtaining flexible films able to be implemented in the GaAs type PV cells which lead to an increase in the conversion efficiency [5]. Similar studies involve the use of CdSe/ZnS QDs in GaAs PV cells [6] or as outer layers of CdS QDs anchored to the Si surface with 3-mercaptopropyl-triethoxysilane, resulting an ~ 1% improvement of conversion efficiency [7]. The introduction of an additional layer of (Lu₃Al₅O₁₂:Ce³⁺) as a photonic converter (UV→Vis) in the multilayer structure of PV cells based on CdS/CdTe allows a notable increase in the conversion efficiency [8]. Another process to improve the PV cells conversion efficiency involves the introduction BaO, ZnF₂, B₂O₃, TeO₂, Dy₂O₃, Sm₂O₃, Eu₂O₃ oxides into a glass melt obtaining UV→Vis/NIR photon conversion layers placed on the outer surface of the PV cells [9]. The introduction of Graphene Quantum Dots (GQD) nanostructures doped with nitrogen (GQD:N), in a poly(vinyl alcohol) polymer matrix allowed obtaining photonic conversion media deposited in thin layers on the PV cell surface, leading, according to the authors, to an increase in conversion efficiencies of 8.96% in the case of PV based on copper-indium-gallium selenide [10]. A similar approach involves introducing GQDs into a poly(vinyl pyrrolidone) polymer matrix, achieving a 12.4% increase in the conversion efficiency of the UV photons incident on the PV cell surface [11]. Textured films with dual anti-reflective and photon conversion roles prepared by introducing Eu³⁺ complexes into a polyurethane polymer matrix were deposited on the surface of PV cells, leading to an improvement of the conversion efficiency [12]. Phosphorus-doped carbon nanostructures (CNS:P) were inserted into a polymethyl methacrylate matrix obtaining a photonic conversion medium configured as the outer layer of perovskite photovoltaic cells, allowing a notable increase of the solar energy conversion efficiency [13]. Another approach involves the preparation of CNSs doped with Er³⁺ with the dual role of increasing the photon absorption spectrum and electron transport within the multi-layer PV cell configuration, through a hydrothermal process involving the processing of the precursors triethylene tetramino hexa acetic acid and Er₂O₃ followed by their introduction into the structure of a PV cell sensitized with CdS [14]. By using argan waste as a precursor for CNS synthesis, followed by purification/size selection and their immobilization into polymer matrices, photonic conversion mediums aiming the improvement of the PV cells conversion efficiency, were obtained [15]. It was also reported green emitting CNS doped with Fe³⁺ through a controlled partial thermal degradation process of a N-Hydroxyphthalimide complex with Fe³⁺, at a 1/3 metal/ligand combination ratio [16]. In an approach intended for use in bimodal medical imaging (fluorescence/NMR) Gd³⁺ and Ru²⁺ doped CNS were prepared by an ultrasonically assisted hydrothermal process from a mixture of Ru(dcbpy)sCl₂ complex, GdCl₃, citric acid and poly(ethylene imine) [17].

The main disadvantages of the photonic conversion mediums used to improve the conversion efficiencies of commercially available PV cells reported to date are:
- in most cases limited natural/commercial availability reactants/materials are needed (lanthanides/rare transition metals), e.g. [4,8,17];
- high potential for negative impact on environmental factors and significant decommissioning/recycling difficulties at the end life of the solar PV panels, e.g. [5,6,8];
- most of the proposed technical solutions involve significant changes in the current manufacturing processes of PV solar panels, with a high impact on production costs, e.g. [8,9];
- reduced physical-chemical stability, upon prolonged exposure to various atmospheric factors (humidity, intense solar radiation, etc.), yielding to significant reduction of the duration of use of PV solar panels, e.g. [10,11,17];

The most similar photonic conversion mediums, which can be used to improve the conversion efficiency of the PV solar panels, are those prepared by introducing phosphorus-doped carbon nanostructures (CNS:P) into a poly(methyl methacrylate) matrix [13], GQD: N in poly(vinyl alcohol) matrix [10] and CNS prepared from argan waste [15], leading to polymeric nanocomposites as thin films deposited on the outer surface of photovoltaic cells.

The technical problem that the invention aims to solve is to obtain a photonic conversion medium with a high quantum yield of radiative processes, extended UV excitation range, using readily available chemical compounds/materials and which can be applied in thin layers located on the surface exposed to solar radiation of the PV panels, capable of improving conversion efficiency by harnessing the content of UV radiation from the solar spectrum and further down-converting it into the visible range.

The solution to the problem consists in the preparation of carbon nanostructures doped with Bi(III) (CNS:Bi) dispersed in deuterated water (D₂O), through a process of controlled thermal processing of an N-Hydroxyphthalimide-Bi(III) complex and the introduction of the resulted nanostructures in a cross-linked polymer matrix of poly(acrylic acid-co-2-hydroxyethyl methacrylate-co-N,N'-Methylenebisacrylamide) followed by the processing of the thus obtained nanocomposite in photopolymerized films arranged on the outer surface of solar PV panels exposed to solar radiation.

The main advantages of the proposed invention are:
- Obtaining a photonic conversion medium with a high yield of radiative processes and a photoluminescent emission located at 470-480 nm and an extended UV-B/UV-A excitation range;
- Use of precursors/materials commercially available on a large scale and low cost;
- Implementation in the manufacturing process of PV solar panels involves minor changes in the production flux;
- The film deposited on the outer surface of the solar panels presents a high degree of optical transparency thus with a negligible influence over the rest of their parameters;
- The materials/compounds within the composition of the photon conversion layer (polymers, CNS including Bi) do not present toxicity;
- Can be used to upgrade solar panels already in operation, by on-site retrofitting through a low complexity procedure.

According to the invention, the preparation of the photoemissive nanocomposite involves a first step of preparing the N-Hydroxyphthalimide - Bi(III) complex at a metal/ligand combination ratio of 1/3. To prepare the complex, the amounts corresponding to the 1/3 combination ratio of BiCl₃ and N-Hydroxyphthalimide (NHF) are dissolved in tetrahydrofuran (THF). The complexation reaction proceeds at reflux, under stirring at a temperature of approx. 65°C and a process duration of approx. 12 hours. Upon completion of the complexation reaction, a precipitate is obtained which is centrifuged for 5-10 min. at 4500-5000 RPM and purified by successive THF replacement and re-centrifugations followed by drying the complex under vacuum or in ambient conditions. In the second stage, the NHF-Bi(III) complex is thermally processed in a system consisting of a pyrolysis mini-reactor made of quartz, equipped with a jacket and a hot air heating system. The process of partial thermal degradation of the complex takes place at a temperature of 620 - 630°C, for 14 - 15 min. After the completion of the thermal exposure stage the hot air source is stopped and the resulted reaction mass is immediately flooded with deuterated water (D₂O) cooled to approx. 5°C. According to the experimental studies carried out by the authors, the use of D₂O as a dispersion medium allows a spectacular increase (the photoluminescence quantum yield values are two times better) of the photoluminescent emission intensity of CNS:Bi carbon nanostructures compared to the situation where H₂O is used as a dispersion medium. The primary dispersion of CNS:Bi in D₂O is further purified and size-selected by centrifugation at 10000 RPM/ approx. 10 minutes followed by a final filtration stage, leading to D₂O dispersed CNS:Bi with dimensions in the range of 10-50 nm. The dispersion have a transparent-clear appearance showing an intense photoluminescent emission in the blue-green spectral region (470-480 nm) under UV excitation (310-390 nm). The third stage involves adding the monomers (acrylic acid -AA, hydroxyethyl methacrylate -HEMA) and the crosslinker (N,N'-Methylene bisacrylamide - MBAAM), molar ratio AA/HEMA/MBAAM = 2.3/1/0.6, in the dispersion D₂O/CNS: Bi. The solvation/homogenization process takes place under vigorous stirring in ambient temperature conditions. The moderate stirring of the mixture is continued for at least 12 hours, the homogenization taking place simultaneously with the spontaneous partial replacement of hydrogen in the structure of the monomers with deuterium, thus improving the physical-chemical stability (by increasing the strength of the C-D bonds, compared to C-H), of the films deposited on the surface of PV solar panel. In the last step, the polymerization photoinitiator (1-Hydroxycyclohexyl phenylketone -HCPK) is added under stirring, the solvation process undergoing in dark conditions to avoid premature initiation of the polymerization process. The mixture thus obtained is applied by spraying on the surface of the PV solar panel, the photopolymerization process being initiated by the incident solar radiation or an artificial UV source. Efficient UV → Vis photonic conversion medium are thus obtained, in the form of thin layers that present a high degree of optical transparency and improved resistance to long-term exposure to environmental factors.

Next, an example of practical implementation of the invention is presented in order to obtain a photonic conversion medium based on CNS:Bi embedded into a P-AHMMA crosslinked polymer matrix, in the form of a thin layer deposited on the outer surface of PV solar panels.

A typical experimental procedure involves, in the initial step, the preparation of the N-Hydroxyphthalimide - Bi(III) complex at a metal/ligand combination ratio of 1/3. Thus, 0.77g of NHF are dissolved under magnetic stirring in 11 mL of THF at a temperature of approx. 65°C in a flask provided with a reflux condenser. Simultaneously, in a separate container, 0.5g of BiCl₃ are dissolved under stirring in 14 mL of THF. After both reactants are dissolved, the solution of BiCl₃ in THF is added to the flask containing NHF/THF, while stirring is maintained. The duration of the complexation reaction is approx. 12 hours, during which both the stirring and the temperature of 65°C were maintained. At the end of the reaction, a brown precipitate is obtained. After removing the supernatant (initial reaction medium) a quantity of approx. 10 mL THF is added and vigorously shaken, the mixture being further centrifuged at 4000-4500 RPM, for 5-10 min. The sequence of supernatant removal-redispersion in THF-stirring-centrifugation is repeated at least 2 times to remove unreacted by-products and finally obtain the purified complex. The precipitate is dried in ambient conditions or in an oven under vacuum (without exceeding the temperature of 60-65°C), until the complex is completely dried. In the next step, CNS:Bi nanostructures are prepared by partial thermal processing of 0.3 g of NHF-Bi(III) complex. The process takes place in a mini-reactor made of quartz equipped with a jacket that ensures efficient heat transfer from the hot air source provided with adjustable temperature and flow rate. The partial thermal decomposition of the complex takes place within 15 min. at a temperature of 620 - 630 °C. After completion of the thermal exposure stage the hot air source is turned of, the resulted reaction mass being immediately flooded with previously 5°C cooled 10 mL of D₂O, followed by rapid evacuation of the primary dispersion from the mini-reactor. The obtained dispersion contains CNS:Bi and larger solid residues resulting from the partial thermal destruction process. In the next step, the resulting dispersion is centrifuged for 10 min. at a speed of 10,000 RPM, the collected supernatant being recentrifuged under the same conditions. After the completion of the centrifugation steps, the collected supernatant is additionally filtered using a filter cartridge with a porosity of max. 300 nm. The resulted dispersion has a transparent-clear appearance containing dimensionally selected CNS:Bi within 10-50 nm range, which exhibits an intense photoluminescent emission upon excitation with wavelengths in the UV range. The third step involves the addition of AA, HEMA and MBAAM monomers (1g AA, 0.4g HEMA, 0.1g MBAAM) under stirring into the D₂O/CNS:Bi dispersion. The solvation/homogenization process takes place in ambient temperature conditions under stirring for at least 12 hours further maintaining these conditions throughout the entire process duration. In the last step, 0.02g HCPK is added under stirring, the solvation process taking place in total darkness, finally obtaining a mixture of monomers, crosslinker and photoinitiator dissolved in the D2O/CNS:Bi dispersion prepared in the second step. The mixture must be kept in total darkness until the moment of application on the surface of the PV solar panels. The mixture is applied by spraying the mixture in 2-3 layers on the surface of the solar panels, the initiation of photopolymerization being initiated by exposure to incident solar radiation or alternatively, by using UV lamps emitting at 365-370 nm. The photopolymerization process is completed in approx. 5-10 min thus obtaining, according to the proposed technical solution, thin polymeric layers as photonic UV → Vis conversion medium, which allow improving the conversion yields of commercially available PV solar panels by harvesting min. 35-40% of UV radiation contained in the incident solar spectrum.

### References

[1] Stefaniuk, A.; Gawinkowski, S.; Golec, B. Goski, A.; Szutkowski, K.; Waluk, J.; Pozna 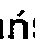 ski, J. Isotope effects observed in diluted D2O/H2O mixtures identify HOD-induced low-density structures in D₂O but not H2O. *Sci. Rep.* **2022,** 12, 18732. DOI: https://doi.org/10.1038/s41598-022-23551-9
[2] Shi, C.; Zhang, X.; Yu, CH.; Yao, YF.; Zhang, W. Geometric isotope effect of deuteration in a hydrogen-bonded host-guest crystal. Nat. Commun. 2018, 9, 481. DOI: https://doi.org/10.1038/s41467-018-02931-8
[3] Nazim, M.; Kim, B.; Lee, S.; Min, B.K.; Kim, J.H. UV-Curable Polymer-QD Flexible Films as the Downconversion Layer for Improved Performance of Cu(In,Ga)Se2 Solar Cells. Energy Fuels 2020, 34, 11, 14581-14590. DOI: https://doi.org/10.1021/acs.energyfuels.0c02741
[4] Long, Z.; Li, S.; Shen, W.; Li, T.; Wang, Y.; Guo, S.; Kipper, M.J.; Snow, C.D.; Belfiore, L.A.; Tang, J. Improved performance for polymer solar cells though photon energy harvesting and down-conversion of Eu3+-induced diblock polymer aggregates (EIPAs). J. Mater. Chem. C, 2023,11, 12730-12739. DOI: https://doi.org/10.1039/D3TC01975F
[5] Chen, H.-C.; Lin, C.-C.; Han, H.-V.; Chen, K.-J.; Tsai,Y.-L.; Chang,Y.-A.; Shih, M.-H.; Kuo,H.-C.; Yu, P. Enhancement of power conversion efficiency in GaAs solar cells with dual-layer quantum dots using flexible PDMS film. SOL ENERG MAT SOL C. 2012, 104, 92-96, DOI: dx.doi.org/10.1016/j.solmat.2012.05.003
[6] Ahn, Y.; Kim, J.; Shin, S.; Ganorkar, S.; Kim, Y.-H.; Kim, Y.-T.; Kim, S.-I. Efficiency Enhancement of GaAs Solar Cell Using Luminescent Down-Shifting Layer Consisting of (CdSe)ZnS Quantum Dots With Calculation and Experiment. J. Sol. Energy Eng. 2015, 137(2): 021011. DOI: https://doi.org/10.1115/1.4028700
[7] Neubauer,A.; Yochelis, S.; Mittelman, G.; Eisenberg, I.; Paltiel, Y. Simple down conversion nano-crystal coatings for enhancing Siliconsolar cells efficiency, AIMS Mater. Sci. 2016, 3(3): 1256-1265. DOI: 10.3934/matersci.2016.3.1256
[8] Bernal-Correa, R.; Morales-Acevedo, A.; Montes-Monsalve, J.Estimating the performance of solar cells with luminescent down-shifting layers. Phys. Scr. 2023; 98(6), DOI: 10.1088/1402-4896/acce7c
[9] Yuliantini, L.; Nursam, N.M.; Paramudita, I.; Pranoto, L.M.; Shobih, S.; Hidayat, J.; Kaewkhao, J.; Djamal, M. Light Management Investigation of Transparent DSSC based on Ln3+ ion doped BaO-ZnF2-B2O3-TeO2 Glass (Ln3+ = Dy3+/Sm3+/Eu3+) as UV Down-conversion Material. IOP Publishing, (J. Phys.: Conf. Ser.) 2024, 2734, 012034. DOI:10.1088/1742-6596/2734/1/012034
[10] Alshahrani, T.; Khan, F.; Al-Rasheidi, M.; Fareed, I.; Majid, M.A.; Kim, J.H. Nitrogen-doped graphene quantum dots/ polyvinyl alcohol nanocomposite for photon management: Application in CIGS photovoltaic cells. Opt. Mater. 2024, 151, 115384. DOI: https://doi.org/10.1016/j.optmat.2024.115384
[11] Zhao, X.; Wu, Y.; Xia, Z.; Chang, S.; Shang, Y.; Cao, A. A GQD-based composite film as photon down-converter in CNT/Si solar cells. Nano Res. 2021, 14, 3893-3899. DOI: https://doi.org/10.1007/s12274-021-3311-5
[12] Jin, S.; Wang, S.; Feng, H.; Heb, D.; Hsu, A.; Du, Z.; Sun, W.; He, H.; Shou, C.; Sun, S.; Yang,D.; Wang, L. Textured anti-reflection and down-conversion composite functional films for high-efficiency solar cells. RSC Adv., 2024, 14, 20191-20198, DOI: 10.1039/D4RA03397C.
[13] Maxim, A.A.; Sadyk, S.N.; Aidarkhanov, D.; Surya, C.; Ng, A.; Hwang,Y,-H. ; Atabaev, T.S.; Jumabekov, A.N. PMMA Thin Film with Embedded Carbon Quantum Dots for Post-Fabrication Improvement of Light Harvesting in Perovskite Solar Cells. Nanomater. 2020, 10, 291; DOI:10.3390/nano10020291
[14] Zhao, C.; Zhang, X.; Shu, X.; Liu, X.; Fang, D.; Song, Y.; Wang, J. Er-doped carbon dots broadening light absorption range and accelerating electron transport for enhancing photovoltaic performance of CdS quantum dots sensitized cells. Opt. Mater. 2018, 84, 242-251, DOI: https://doi.org/10.1016/j.optmat.2018.07.016
[15] Stan, C.S.; Elouakassi, N.; Albu, C.; Ania, C.O.; Coroaba, A.; Ursu, L.E.; Popa, P.; Kaddami, H.; Almaggoussi, A. Photoluminescence of argan-waste-derived carbon nanodots embedded in polymer matrices. Nanomater. 2024, 14, 83. DOI: https://doi.org/10.3390/nano14010083
[16] Stan, C.S.; Coroaba, A.; Ursu, E.L.; Secula, M.S.; Simionescu, B.C. Fe(III) doped carbon nanodots with intense green photoluminescence and dispersion medium dependent emission. Sci Rep.2019, 9, 18893, DOI: https://doi.org/10.1038/s41598-019-55264-x
[17] Shi, Y.; Xia,Y.; Zhou, M.; Wang, Y.; Bao, J.; Zhang, Y.; Cheng, J. Facile synthesis of Gd/Ru-doped fluorescent carbon dots for fluorescent/MR bimodal imaging and tumor therapy. J Nanobiotechnol 2024, 22, 88. DOI: https://doi.org/10.1186/s12951-024-02360-4

## Claims

1. Photonic conversion medium intended for improving the conversion yields of photovoltaic solar panels ***characterized by** the fact that* it is composed of carbon nanostructures doped with Bi³⁺ (CNS:Bi) prepared through thermal processing of a complex of N-Hydroxyphthalimide - Bi(lll) and further dispersion in D₂O followed by the solvation of the monomers - acrylic acid, 2-hydroxyethyl methacrylate, the crosslinker - N,N'-Methylenebisacrylamide and the photoinitiator - 1-Hydroxy cyclohexylphenylketone, which through photopolymerization lead to obtaining optically transparent films with intense photoluminescent emission at 470-480 nm within 300-400 nm UV excitation range of poly(acrylic acid-co-2-hydroxyethyl methacrylate-co-N,N'-methylene bisacrylamide) having CNS:Bi embedded in the polymer matrix.

2. Process for the preparation of a photonic conversion medium intended for increasing the conversion yields of photovoltaic solar panels, ***characterized by** the fact that* involves the initial preparation of an N-Hydroxyphthalimide-Bi(III) complex, at a metal/ligand combination ratio of 1/ 3 followed by a controlled thermal degradation process to obtain carbon nanostructures doped with Bi(III) dispersed in D₂O, the solvation in this dispersion of acrylic acid, 2-hydroxyethyl methacrylate, N,N'-Methylene bisacrylamide at a molar ratio of 2.3/1/0.6 and of the photoinitiator-1-Hydroxycyclohexyl phenylketone, which is subsequently photopolymerized into resultant optically transparent thin layers by exposure to solar radiation or UV sources.
